# EUROPEAN PATENT APPLICATION

(11) **EP 4 310 361 A1**
(43) Date of publication of application: **24.01.2024**
(21) Application number: 22774881.1
(22) Date of filing: 24.02.2022
(51) Int. Cl.: F16F 9/14, F16F 9/19, F16F 9/32

(54) **DAMPER DEVICE**

(30) Priority: 20.03.2021 JP 2021046702
(71) Applicant: Somic Management Holdings Inc., Sumida-ku Tokyo 130-0004 (JP)
(72) Inventor: NAKAYA Kazumasa, Hamamatsu-shi, Shizuoka 431-2103 (JP)
(74) Representative: Zimmermann, Tankred Klaus
(86) International application number: PCT/JP2022/007699
(87) International publication number: WO 2022/202083

(57) **Abstract**

A damper device 100 is configured as a rotary damper, and a compensation device housing portion 110 is formed in a housing body 102 forming a housing 101. The compensation device housing portion 110 is formed in a bottomed cylindrical shape extending along the axial direction of a bottomed cylindrical hydraulic fluid housing portion 103 formed inside the housing body 102. The compensation device housing portion 110 has an external-air-side surface 112 projecting from the housing body 102 and exposed to the outside and a hydraulic-fluid-side surface 113 projecting into the hydraulic fluid housing portion 103. In this case, the compensation device housing portion 110 is formed, between a fixed vane 104 and a housing portion wall surface 103b, across a cell R1 and a cell R4 of four cells R1 to R4 into which the inside of the hydraulic fluid housing portion 103 is divided.

## Description

### TECHNICAL FIELD

The present invention relates to a damper device including a volume change compensation device connected to a hydraulic fluid housing portion liquid-tightly housing liquid to compensate for a volume change in the liquid.

### BACKGROUND ART

Typically, in a four-wheeled or two-wheeled self-propelled vehicle or an industrial mechanical instrument, a rotary damper is used as a motion energy damping device in a turning mechanism. For example, Patent Literature 1 below discloses a rotary damper including, in the outer surface of a housing formed with a hydraulic fluid chamber, a temperature compensation mechanism as a volume change compensation device. This temperature compensation mechanism is provided for compensating for a volume change in hydraulic fluid in the hydraulic fluid chamber due to a temperature change.

### CITATION LIST

### PATENT LITERATURE

PATENT LITERATURE 1: JP-A-11-82593

### SUMMARY OF INVENTION

However, in the rotary damper disclosed in Patent Literature 1 above, the temperature compensation mechanism as the volume change compensation device is provided so as to project from the outer surface of the housing. For this reason, there are problems that the rotary damper is increased in size, the outer shape thereof is complicated, and the installation location thereof is limited.

The present invention has been made to cope with the above-described problems. An object of the present invention is to provide a damper device whose outer shape can be reduced in size and is simplified and whose installation location variations can be increased.

To achieve the above object, one aspect of the present invention is a damper device including: a hydraulic fluid housing portion that liquid-tightly houses hydraulic fluid including liquid; a hydraulic fluid pressing body that slides in the hydraulic fluid housing portion while pushing the hydraulic fluid; and a compensation device housing portion that houses a volume change compensation device configured to compensate for a volume change in the hydraulic fluid in the hydraulic fluid housing portion, in which: the damper device damps force input to the hydraulic fluid pressing body by a flow of the hydraulic fluid; part of the compensation device housing portion has an external-air-side surface contacting external air; and another part of the compensation device housing portion has a hydraulic-fluid-side surface contacting the hydraulic fluid in the hydraulic fluid housing portion.

According to the feature of the present invention configured as described above, the damper device is configured such that part of the compensation device housing portion housing the volume change compensation device has the external-air-side surface contacting the external air and another part of the compensation device housing portion has the hydraulic-fluid-side surface contacting the hydraulic fluid in the hydraulic fluid housing portion. That is, the damper device is configured such that the part of the compensation device housing portion faces the external air and the other part of the compensation device housing portion faces or enters the hydraulic fluid housing portion. Thus, the amount of projection of the compensation device housing portion from the outer surface of the damper device can be reduced, the outer shape of the damper device can be reduced in size and simplified, and the installation location variations can be increased.

Another aspect of the present invention is that in the damper device, a surface area of the external-air-side surface is greater than a surface area of the hydraulic-fluid-side surface in the compensation device housing portion.

According to another feature of the present invention configured as described above, in the damper device, the surface area of the external-air-side surface is greater than the surface area of the hydraulic-fluid-side surface in the compensation device housing portion. Thus, the amount of projection of the compensation device housing portion into the hydraulic fluid housing portion can be reduced, and a decrease in the capacity of the hydraulic fluid housing portion can be suppressed. In a case where the damper device is configured as the rotary damper, a decrease in the slide amount of the hydraulic fluid pressing body can be suppressed.

Still another aspect of the present invention is that in the damper device, a surface area of the hydraulic-fluid-side surface is greater than a surface area of the external-air-side surface in the compensation device housing portion.

According to still another feature of the present invention configured as described above, in the damper device, the surface area of the hydraulic-fluid-side surface is greater than the surface area of the external-air-side surface in the compensation device housing portion. Thus, the amount of projection of the compensation device housing portion from the outer surface of the damper device can be reduced, the outer shape of the damper device can be reduced in size and simplified, and the installation location variations can be increased.

Still another aspect of the present invention is that the damper device is configured as a rotary damper including: a housing having the hydraulic fluid housing portion formed in a cylindrical shape and having a fixed vane formed in a wall shape along a radial direction in the hydraulic fluid housing portion and dividing an inside of the hydraulic fluid housing portion to block a flow of the hydraulic fluid in a circumferential direction; and a rotor having, at an outer peripheral portion of a shaft, a movable vane dividing the inside of the hydraulic fluid housing portion and configured to turn while pushing the hydraulic fluid.

According to still another feature of the present invention configured as described above, the damper device is the rotary damper, and can compensate for the volume change in the hydraulic fluid. This rotary damper includes: the housing having the hydraulic fluid housing portion formed in the cylindrical shape and having the fixed vane formed in the wall shape along the radial direction in the hydraulic fluid housing portion and dividing the inside of the hydraulic fluid housing portion to block the flow of the hydraulic fluid in the circumferential direction; and the rotor having, at the outer peripheral portion of the shaft, the movable vane dividing the inside of the hydraulic fluid housing portion and configured to turn while pushing the hydraulic fluid.

Still another aspect of the present invention is that in the damper device, the compensation device housing portion is formed in the housing.

According to still another feature of the present invention configured as described above, in the damper device, the compensation device housing portion is formed in the housing. Thus, the large compensation device housing portion can be formed without greatly projecting along the shape of the housing.

Still another aspect of the present invention is that in the damper device, the hydraulic fluid housing portion is formed in a bottomed cylindrical shape opened on one side and having a bottom portion on another side, and an opening thereof is closed with a lid; and the compensation device housing portion has, on a side opposite to the lid, an opening through which the volume change compensation device is taken in or out.

According to still another feature of the present invention configured as described above, in the damper device, the compensation device housing portion has, on the side opposite to the lid, the opening through which the volume change compensation device is taken in or out. Thus, the volume change compensation device can be taken in or out from the side opposite to the lid, and the compensation device housing portion is formed in close contact with the lid so that the outer shape of the damper device can be reduced in size and simplified and the installation location variations can be increased.

Still another aspect of the present invention is that in the damper device, the compensation device housing portion is formed so as to project to both sides of the fixed vane.

According to still another feature of the present invention configured as described above, in the damper device, the compensation device housing portion is formed so as to project to both sides of the fixed vane. Thus, the compensation device housing portion and the fixed vane can reinforce each other, leading to higher stiffness.

Still another aspect of the present invention is that in the housing of the damper device, the inside of the hydraulic fluid housing portion is divided into at least two cells, and the compensation device housing portion is formed so as to communicate with a cell, which is constantly under a relatively-low pressure, among the at least two divided cells.

According to still another feature of the present invention configured as described above, in the damper device, the compensation device housing portion is formed so as to communicate with the cell, which is constantly under the relatively-low pressure, among the at least two cells. Thus, a disadvantage that the pressure of each cell under a relatively-high pressure is absorbed by the volume change compensation device and the pressures of these cells are less likely to increase can be avoided.

Still another aspect of the present invention is that in the damper device, the compensation device housing portion is formed at a position adjacent to the cell communicating with the compensation device housing portion.

According to still another feature of the present invention configured as described above, in the damper device, the compensation device housing portion is formed at the position adjacent to the cell communicating with the compensation device housing portion. Thus, the outer shape of the damper device can be reduced in size and simplified, and the installation location variations can be increased.

Still another aspect of the present invention is that in the damper device, the hydraulic fluid housing portion is formed in the bottomed cylindrical shape opened on the one side and having the bottom portion on the another side, and the opening thereof is closed with the lid; and in the compensation device housing portion, a communication hole through which the hydraulic fluid flows to and from the hydraulic fluid housing portion is opened on a side close to the opening of the hydraulic fluid housing portion.

According to still another feature of the present invention configured as described above, in the damper device, the compensation device housing portion has the communication hole through which the hydraulic fluid flows to and from the hydraulic fluid housing portion. Further, the communication hole is opened on the side close to the opening of the hydraulic fluid housing portion. Thus, the communication hole can be easily and accurately formed through the opening of the hydraulic fluid housing portion.

### BRIEF DESCRIPTION OF DRAWINGS

Fig. 1 is a perspective view of an entire configuration of a damper device according to the present invention from a lid side;
Fig. 2 is a perspective view of an external configuration of the damper device shown in Fig. 1 from a housing body side;
Fig. 3 is a longitudinal sectional view showing an internal structure of the damper device shown in Fig. 1;
Fig. 4 is a cross-sectional view showing the internal structure of the damper device shown in Fig. 1;
Fig. 5 is a perspective view showing an entire configuration of a housing body shown in Fig. 1;
Fig. 6 is a schematic view of the structure of the cross section of the damper device for describing an operation state in which a rotor of the damper device shown in Fig. 4 has turned counterclockwise;
Fig. 7 is a schematic view of the structure of the cross section of the damper device for describing an operation state in which the rotor of the damper device shown in Fig. 4 has turned clockwise; and
Fig. 8 is a cross-sectional view showing an internal structure of a damper device according to a modification of the present invention.

### DESCRIPTION OF EMBODIMENTS

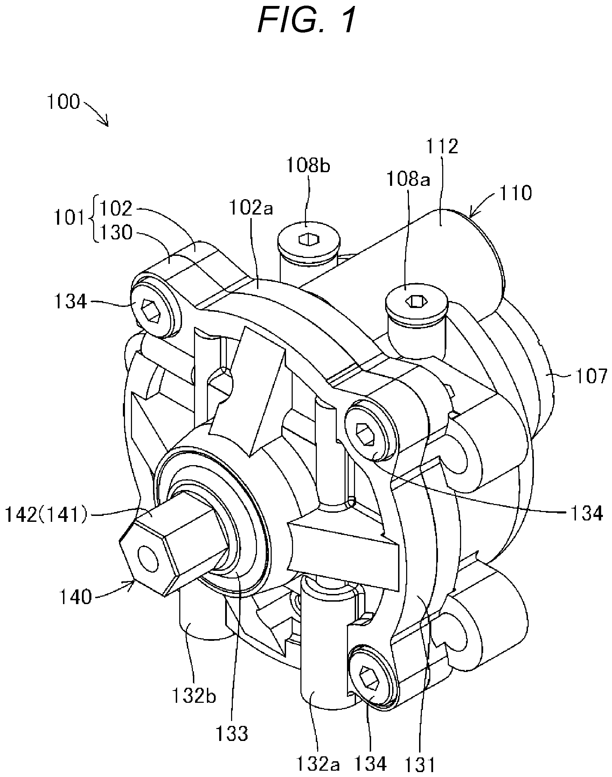

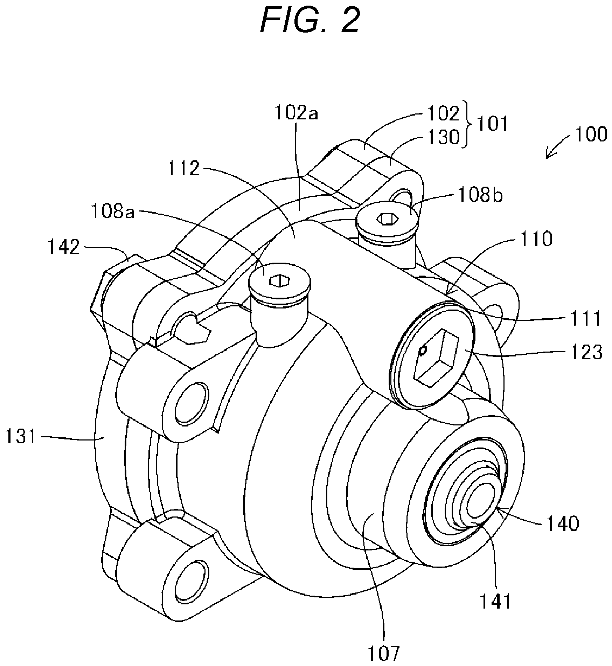

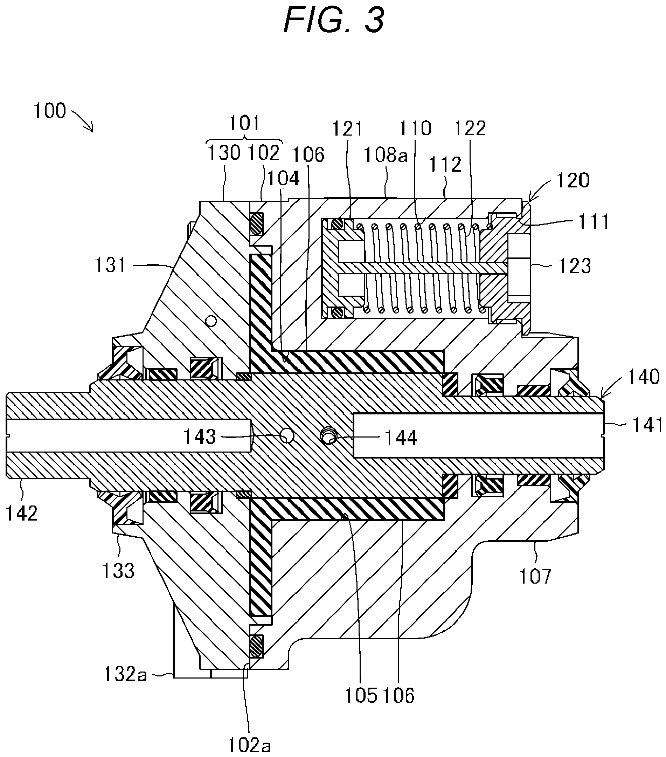

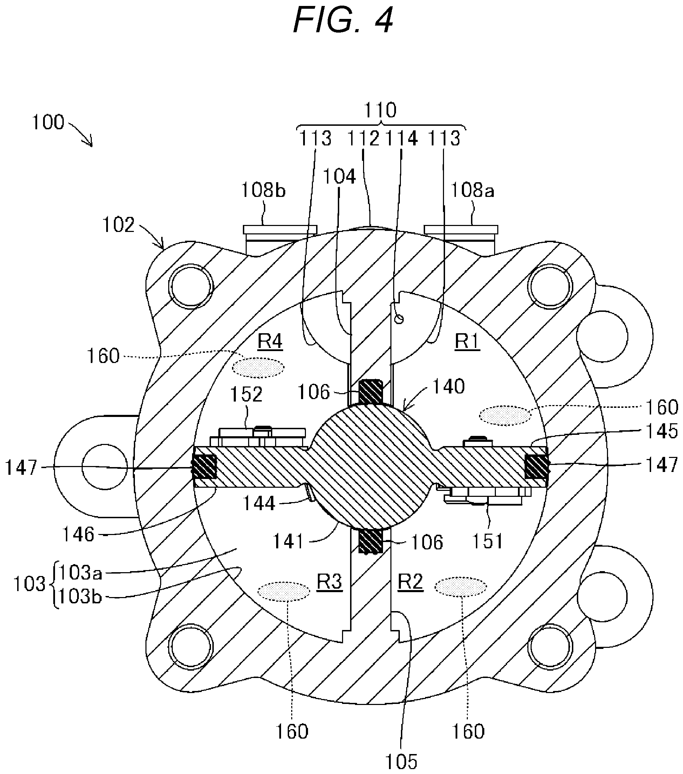

Hereinafter, one embodiment of a damper device according to the present invention will be described with reference to the drawings. Fig. 1 is a perspective view of an entire configuration of a damper device 100 according to the present invention from a lid side. Fig. 2 is a perspective view of an external configuration of the damper device 100 shown in Fig. 1 from a housing body side. Fig. 3 is a cross-sectional view showing an internal structure of the damper device 100 shown in Fig. 1. Fig. 4 is a longitudinal sectional view showing the internal structure of the damper device 100 shown in Fig. 1.

Note that each figure as a reference in the present specification is schematically shown for the sake of easy understanding of the present invention, and for example, includes a portion exaggeratingly showing some components. Thus, dimensions, ratios, and the like may vary among the components. The damper device 100 is a damping device attached to a base end portion of a swing arm, which supports a rear wheel of a two-wheeled self-propelled vehicle (motorcycle) such that the rear wheel is movable up and down, to damp motion energy in up-down movement of the rear wheel.

### (Configuration of Damper Device 100)

The damper device 100 includes a housing 101. The housing 101 is a component rotatably holding a later-described rotor 140 and forming a casing of the damper device 100. The housing 101 is made of an aluminum material, an iron material, a zinc material, or various resin materials such as polyamide resin. Specifically, the housing 101 mainly includes a housing body 102 and a lid 130.

The housing body 102 is a component housing a volume change compensation device 120, movable vanes 145, 146 of the rotor 140, and hydraulic fluid 160 and rotatably supporting one end portion of a shaft 141 of the rotor 140. The housing body 102 is formed in such a bottomed cylindrical shape that one end of the tubular body is opened large and the other end is opened small. More specifically, in the housing body 102, one end portion of the tubular body is formed with a lid attachment portion 102a projecting in a flange shape, and inside the lid attachment portion 102a, a cylindrical hydraulic fluid housing portion 103 is opened large.

On the other hand, the other end portion of the housing body 102 is formed with a rotor support portion 107 with the rotor support portion 107 communicating with a bottom portion 103a of the hydraulic fluid housing portion 103. The outer surface of the housing body 102 is formed with air vent holes 108a, 108b and a compensation device housing portion 110.

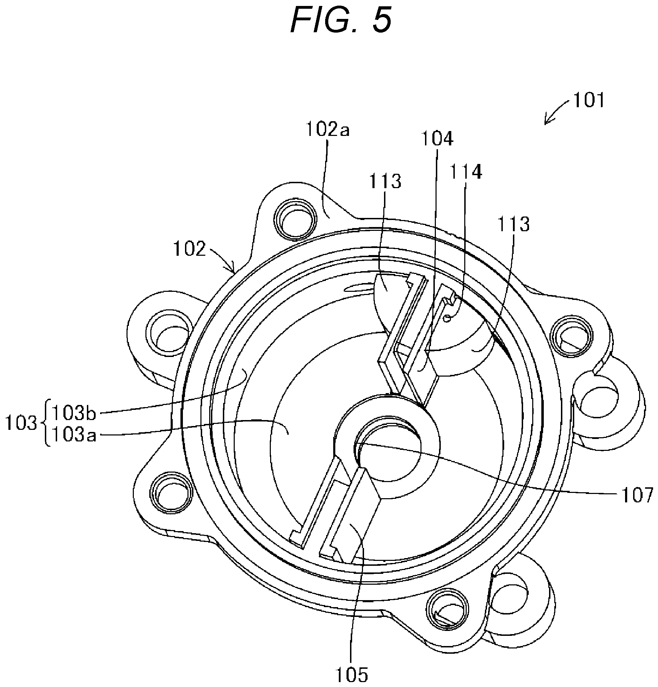

As shown in Figs. 4 and 5, the hydraulic fluid housing portion 103 is a space where the movable vanes 145, 146 of the rotor 140 and the hydraulic fluid 160 are liquid-tightly housed. The hydraulic fluid housing portion 103 includes two semicylindrical spaces facing each other through the rotor 140 arranged at the center in the housing body 102. In these spaces of the hydraulic fluid housing portion 103, fixed vanes 104, 105 are formed integrally with the housing body 102.

The fixed vanes 104, 105 are wall-shaped portions dividing, together with the rotor 140, the inside of the hydraulic fluid housing portion 103 into cells R1 to R4. The fixed vanes 104, 105 are formed so as to project inwardly in a raised shape from a housing portion wall surface 103b along the axis direction of the housing body 102. In this case, the two fixed vanes 104, 105 are provided at positions facing each other in a circumferential direction on the inner circumference of the housing portion wall surface 103b. Of each of these fixed vanes 104, 105, a tip end portion facing the later-described lid 130 and the later-described shaft 141 of the rotor 140 is formed in a recessed groove shape. A seal 106 is fitted in such a groove.

The seal 106 is a component for ensuring the liquid tightness of the cells R1 to R4 formed in the hydraulic fluid housing portion 103. The seal 106 is formed in such a manner that an elastic material including various rubber materials such as nitrile rubber, hydrogenated nitrile rubber, and fluorine-containing rubber is formed in an L-shape as viewed from the side. The seal 106 is attached so as to project from each tip end portion of the fixed vanes 104, 105 to slidably closely contact the inner surface of the lid 130 and the outer peripheral surface of the shaft 141 of the rotor 140.

The rotor support portion 107 is a cylindrical portion rotatably supporting the one end portion of the shaft 141 of the rotor 140. The rotor support portion 107 liquid-tightly supports the shaft 141 of the rotor 140 through a bearing and a seal material, such as a packing.

The air vent holes 108a, 108b are through-holes each communicating with the cell R1 and the cell R4 and used for removing air from the cell R1 and the cell R4. Plugs detachably close these air vent holes 108a, 108b.

The compensation device housing portion 110 is a portion where the volume change compensation device 120 is housed. The compensation device housing portion 110 is formed integrally with the housing body 102 with the compensation device housing portion 110 exposed on the outer surface of the housing body 102. The compensation device housing portion 110 has an external-air-side surface 112 and a hydraulic-fluid-side surface 113, and is formed in a bottomed cylindrical shape extending along the axis direction of the housing body 102. In this case, the compensation device housing portion 110 is formed with an opening 111 on the rotor support portion 107 side such that the opening 111 is opened to the outside, and the lid attachment portion 102a side of the compensation device housing portion 110 is closed by part of the lid attachment portion 102a. The opening 111 is a portion through which the volume change compensation device 120 is taken in or out. The opening 111 is closed with a plug 123.

The external-air-side surface 112 is the outer surface of the compensation device housing portion 110 exposed on the outer surface of the housing body 102. On the other hand, the hydraulic-fluid-side surface 113 is the outer surface of the compensation device housing portion 110 exposed in the hydraulic fluid housing portion 103. That is, the compensation device housing portion 110 is formed such that part of the outer surface is exposed at the external-air-side surface 112 so as to project from the outer surface of the housing body 102 and another part of the outer surface projects into the hydraulic fluid housing portion 103 at the hydraulic-fluid-side surface 113. In the present embodiment, the compensation device housing portion 110 is formed so as to project into the hydraulic fluid housing portion 103 to a depth of about the half of the inner diameter. Thus, the compensation device housing portion 110 is formed such that the surface area of the external-air-side surface 112 is greater than the surface area of the hydraulic-fluid-side surface 113.

In this case, the compensation device housing portion 110 is formed so as to project in a fan shape in the circumferential direction into the hydraulic fluid housing portion 103 from both wall surfaces of the fixed vane 104 formed in the hydraulic fluid housing portion 103. That is, the compensation device housing portion 110 is formed, between the fixed vane 104 and the housing portion wall surface 103b, across the cell R1 and the cell R4 of the four cells R1 to R4 into which the inside of the hydraulic fluid housing portion 103 is divided. The compensation device housing portion 110 communicates with the hydraulic fluid housing portion 103, and is formed with a communication hole 114.

The communication hole 114 is a portion allowing the hydraulic fluid 160 to flow in both directions between the hydraulic fluid housing portion 103 and the compensation device housing portion 110. The communication hole 114 is a through-hole. The communication hole 114 is formed between a bottom portion of the compensation device housing portion 110 and the hydraulic fluid housing portion 103. In this case, the communication hole 114 is formed so as to communicate with one, which is constantly under a low pressure, of the four cells R1 to R4, i.e., the cell R1 in the present embodiment.

The volume change compensation device 120 is equipment for compensating for a volume change in the hydraulic fluid 160 in the hydraulic fluid housing portion 103 due to expansion or contraction caused by a temperature change. Specifically, the volume change compensation device 120 mainly includes a cylinder, a piston 121, a pressing elastic body 122, and the plug 123. The cylinder is a portion housing the hydraulic fluid 160, the piston 121, the pressing elastic body 122, and the plug 123, and is the above-described compensation device housing portion 110.

The piston 121 is a component for forming, in the cylinder (compensation device housing portion 110), a space where the hydraulic fluid 160 guided through the communication hole 114 is housed. The piston 121 is formed in a circular columnar shape so as to liquid-tightly slide in the cylinder in the axial direction thereof. Of the piston 121, the surface on the communication hole 114 side is formed in a flat discoid shape with such a size that the cylinder is closed with such a surface, and the side opposite to the communication hole 114 extends in a bar shape and is slidably fitted in the plug 123.

The pressing elastic body 122 is a coil spring provided between the piston 121 and the plug 123 and elastically pressing the piston 121 to the communication hole 114 side. The plug 123 is a component receiving reactive force from the pressing elastic body 122. The plug 123 is screwed to an end portion of the cylinder (compensation device housing portion 110). That is, the volume change compensation device 120 is assembled integrally with the housing body 102.

The lid 130 is a component for liquid-tightly closing the hydraulic fluid housing portion 103 formed in the housing body 102. The lid 130 mainly includes a lid body 131 and a rotor support portion 133. The lid body 131 is a portion liquid-tightly closing the hydraulic fluid housing portion 103. The lid body 131 is formed in a plate shape corresponding to the lid attachment portion 102a. The lid body 131 is formed with adjustment needles 132a, 132b.

The adjustment needle 132a is the following component. That is, the adjustment needle 132a is formed inside the lid body 131. The adjustment needle 132a allows the cell R1 and the cell R2 in the hydraulic fluid housing portion 103 to communicate with each other, and accordingly, allows the hydraulic fluid 160 to flow therebetween. Further, the adjustment needle 132a seals, from the outside, bypass flow paths (not shown) allowing each of the cell R1 and the cell R2 to communicate with the outside, and adjusts the flow rate of the circulating hydraulic fluid 160. The adjustment needle 132a is turned using a tool (not shown) such as a screwdriver so that the circulation amount of the hydraulic fluid 160 can be increased/decreased.

The adjustment needle 132b is the following component. That is, the adjustment needle 132b is formed inside the lid body 131. The adjustment needle 132b allows the cell R1 and the cell R3 in the hydraulic fluid housing portion 103 to communicate with each other, and accordingly, allows the hydraulic fluid 160 to flow therebetween. Further, the adjustment needle 132b seals, from the outside, bypass flow paths (not shown) allowing each of the cell R1 and the cell R3 to communicate with the outside, and adjusts the flow rate of the circulating hydraulic fluid 160. The adjustment needle 132b is turned using a tool (not shown) such as a screwdriver so that the circulation amount of the hydraulic fluid 160 can be increased/decreased. Note that in Figs. 1 and 3, tubular portions, in which the adjustment needles 132a, 132b are provided, of the lid body 131 are shown with reference numerals.

The rotor support portion 133 is a cylindrical portion rotatably supporting the other end portion of the shaft 141 of the rotor 140. The rotor support portion 133 liquid-tightly supports an outer peripheral portion of the shaft 141 of the rotor 140 through a bearing and a seal material, such as a packing. The lid 130 is attached to the lid attachment portion 102a, where the hydraulic fluid housing portion 103 is opened, of the housing body 102 with four bolts 134.

The rotor 140 is a component arranged in the hydraulic fluid housing portion 103 of the housing 101, dividing the inside of the hydraulic fluid housing portion 103 into the cell R1, the cell R2, the cell R3, and the cell R4 which are four spaces, and turning in the hydraulic fluid housing portion 103 to increase/decrease the volume of each of the cell R1, the cell R2, the cell R3, and the cell R4. The rotor 140 mainly includes the shaft 141 and the movable vanes 145, 146.

The shaft 141 is a rod-shaped portion supporting the movable vanes 145, 146. The shaft 141 is made of an aluminum material, an iron material, a zinc material, or various resin materials such as polyamide resin. The shaft 141 is formed in a tubular shape at both end portions, and is rotatably slidably supported on the rotor support portion 107 of the housing body 102 and the rotor support portion 133 of the lid 130. At one (upper one in Fig. 3) of both end portions of the shaft 141, a coupling portion 142 for connection to one of two components attached to the damper device 100 is formed so as to extend in the axial direction. In the present embodiment, the coupling portion 142 is formed in a bar shape with a hexagonal section.

The shaft 141 is also formed with an in-shaft bidirectional communication path 143 and an in-shaft unidirectional communication path 144. The in-shaft bidirectional communication path 143 is a path allowing the hydraulic fluid 160 to flow in both directions between two cells whose volumes are simultaneously decreased by turning of the movable vanes 145, 146 in one direction and are simultaneously increased by turning of the movable vanes 145, 146 in the other direction. In the present embodiment, the in-shaft bidirectional communication path 143 is formed so as to penetrate the shaft 141 such that the cell R2 and the cell R4 whose volumes are simultaneously increased by counterclockwise turning of the movable vanes 145, 146 as viewed in the figure and are simultaneously decreased by clockwise turning as viewed in the figure communicate with each other.

The in-shaft unidirectional communication path 144 is a path allowing the hydraulic fluid 160 to flow only from one side to the other side between two cells whose volumes are simultaneously increased by turning of the movable vanes 145, 146 in the one direction and are simultaneously decreased by turning of the movable vanes 145, 146 in the other direction. In the present embodiment, the in-shaft unidirectional communication path 144 is formed so as to penetrate the shaft 141 between the cell R1 and the cell R3 whose volumes are simultaneously decreased by counterclockwise turning of the movable vanes 145, 146 as viewed in the figure and are simultaneously increased by clockwise turning as viewed in the figure. In this case, the in-shaft unidirectional communication path 144 is formed so as to penetrate the shaft 141 through a one-way valve such that the hydraulic fluid 160 flows only from the cell R1 to the cell R3.

The movable vanes 145, 146 are components for liquid-tightly increasing/decreasing the volume of each of the multiple spaces while dividing the inside of the hydraulic fluid housing portion 103 into these multiple spaces. The movable vanes 145, 146 are formed as plate-shaped bodies extending in the radial direction of the shaft 141 (hydraulic fluid housing portion 103). In this case, these two movable vanes 145, 146 are formed so as to extend in opposite directions (in other words, on the same virtual plane) through the shaft 141. Of each of these movable vanes 145, 146, a C-shaped (or a backwards C-shaped) tip end portion facing the bottom portion 103a, the housing portion wall surface 103b, and the inner surface of the lid 130 is formed in a recessed groove shape. A seal 147 is fitted in such a groove.

As in the seal 106, the seal 147 is a component for ensuring the liquid tightness of the cells R1 to R4 formed in the hydraulic fluid housing portion 103. The seal 147 is formed in such a manner that an elastic material including various rubber materials such as nitrile rubber, hydrogenated nitrile rubber, and fluorine-containing rubber is formed in a C-shape (or a backwards C-shape) as viewed from the side. The seal 147 is attached so as to project from each tip end portion of the movable vanes 145, 146 to slidably closely contact the bottom portion 103a, the housing portion wall surface 103b, and the inner surface of the lid 130.

With these configurations, the movable vanes 145, 146 cooperate with the fixed vanes 104, 105 to liquid-tightly form the cell R1, the cell R2, the cell R3, and the cell R4, which are the four spaces, in the hydraulic fluid housing portion 103. More specifically, in the hydraulic fluid housing portion 103, the fixed vane 104 and the movable vane 145 form the cell R1, the movable vane 145 and the fixed vane 105 form the cell R2, the fixed vane 105 and the movable vane 146 form the cell R3, and the movable vane 146 and the fixed vane 104 form the cell R4. That is, the cell R1, the cell R2, the cell R3, and the cell R4 are sequentially formed adjacent to each other along the circumferential direction in the hydraulic fluid housing portion 103.

These movable vanes 145, 146 are formed with an in-vane bidirectional communication path 151 and an in-vane unidirectional communication path 152. The in-vane bidirectional communication path 151 is formed in the movable vane 145 dividing the cell R1 and the cell R2 from each other such that the cell R2 of the cells R2, R4 which are two communication cells communicating with each other through the in-shaft bidirectional communication path 143 and the cell R1 of the cells R1, R3 which are two unidirectional communication cells communicating with each other through the in-shaft unidirectional communication path 144 communicate with each other.

The in-vane bidirectional communication path 151 allows the hydraulic fluid 160 to flow from the cell R1 side to the cell R2 side, and allows the hydraulic fluid 160 to flow, in a limited manner, from the cell R2 side to the cell R1 side. Specifically, the in-vane bidirectional communication path 151 is configured such that a one-way valve allowing the flow of fluid only from one side to the other side and a throttle valve allowing the flow of fluid in both directions while allowing the flow in a limited manner are arranged in parallel. Note that "allowing the flow in a limited manner" means that as compared to the degree of ease of flow of fluid (hydraulic fluid 160) in a one-way valve, the fluid is less likely to flow under the same conditions (e.g., a pressure and a hydraulic fluid viscosity).

The in-vane unidirectional communication path 152 is formed in the movable vane 146 dividing the cell R3 and the cell R4 from each other to allow the hydraulic fluid 160 to flow, in a limited manner, only from the cell R3 side to the cell R4 side between the cell R3 and the cell R4 not communicating with the in-vane bidirectional communication path 151. Specifically, the in-vane unidirectional communication path 152 is configured such that a one-way valve allowing the hydraulic fluid 160 to flow only from the cell R3 side to the cell R4 side and a throttle valve allowing the hydraulic fluid 160 to flow in both directions while allowing the flow of the hydraulic fluid 160 in a limited manner are arranged in series.

In the damper device 100, the flow of the hydraulic fluid 160 among the cell R1 to the cell R4 is limited by the in-shaft bidirectional communication path 143, the in-shaft unidirectional communication path 144, the in-vane bidirectional communication path 151, and the in-vane unidirectional communication path 152, and accordingly, damping force is generated in turning of the rotor 140. That is, the damper device 100 according to the present embodiment is configured as a rotary damper that generates damping force in rotary motion.

The hydraulic fluid 160 is a substance providing resistance to the movable vanes 145, 146 turning in the hydraulic fluid housing portion 103 such that the damper function of the damper device 100 is fulfilled. The inside of the hydraulic fluid housing portion 103 is filled with the hydraulic fluid 160. The hydraulic fluid 160 includes a liquid, gel, or semisolid substance having flowability and viscosity according to the specifications of the damper device 100. In this case, the viscosity of the hydraulic fluid 160 is selected as necessary according to the specifications of the damper device 100. In the present embodiment, the hydraulic fluid 160 includes, for example, oil such as mineral oil and silicone oil. Note that in Fig. 4, the hydraulic fluid 160 is diagonally hatched in dashed circles.

### (Operation of Damper Device 100)

Next, operation of the damper device 100 configured as described above will be described. The damper device 100 is attached to between two instruments turning relative to each other to generate the damping force in turning. For example, the damper device 100 generates the damping force on the swing arm when the swing arm moves up and down while the self-propelled vehicle is running.

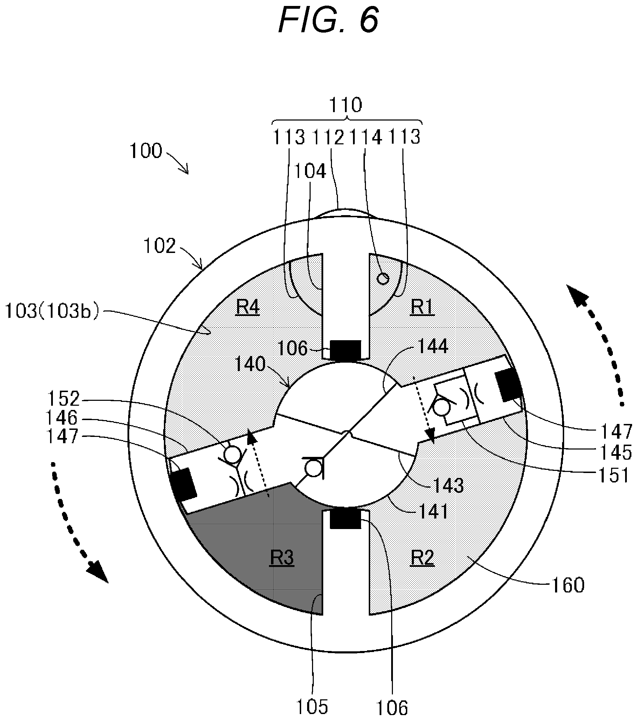

Specifically, in a case where the lowered swing arm moves up when the rear wheel of the self-propelled vehicle moves on, e.g., a step, the rotor 140 turns counterclockwise as shown in Fig. 6 in the damper device 100. That is, in the damper device 100, the movable vane 145 turns toward the fixed vane 104, and the movable vane 146 turns toward the fixed vane 105.

In this case, in the damper device 100, only the cell R3 is brought into a high-pressure state with a limited outflow of the hydraulic fluid 160 by action of the in-shaft bidirectional communication path 143, the in-shaft unidirectional communication path 144, the in-vane bidirectional communication path 151, and the in-vane unidirectional communication path 152. Accordingly, the rotor 140 turns counterclockwise as viewed in the figure while generating smaller damping force than that in later-described clockwise turning as viewed in the figure.

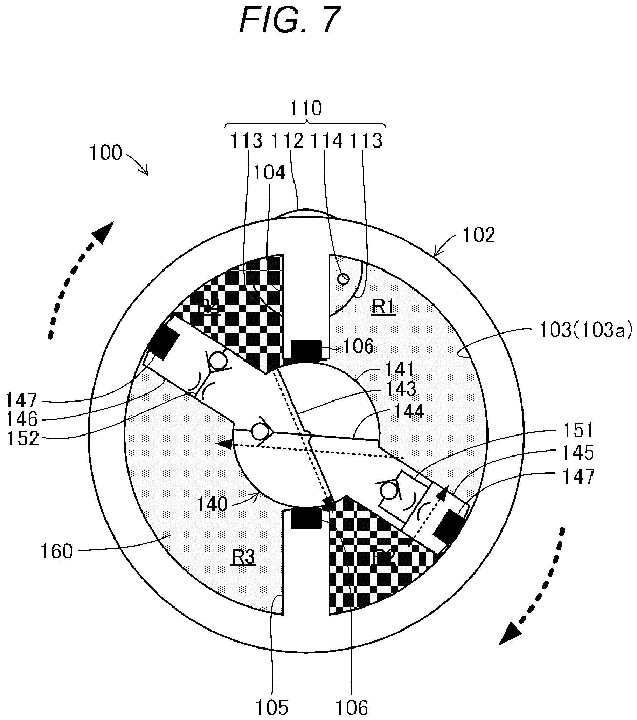

On the other hand, in a case where the lifted swing arm moves down after the rear wheel of the self-propelled vehicle has moved beyond the step, the rotor 140 turns clockwise as shown in Fig. 7 in the damper device 100. That is, in the damper device 100, the movable vane 145 turns toward the fixed vane 105, and the movable vane 146 turns toward the fixed vane 104.

In this case, in the damper device 100, each of the cell R2 and the cell R4 is brought into a high-pressure state with a limited outflow of the hydraulic fluid 160 by action of the in-shaft bidirectional communication path 143, the in-shaft unidirectional communication path 144, the in-vane bidirectional communication path 151, and the in-vane unidirectional communication path 152. Accordingly, the rotor 140 turns clockwise as viewed in the figure while generating greater damping force than that in the above-described counterclockwise turning as viewed in the figure. That is, the volume change compensation device 120 communicates with the cell R1 which is maintained in a low-pressure state without being brought into a high-pressure state both in clockwise turning and counterclockwise turning of the rotor 140 as viewed in the figure.

Note that in Figs. 6 and 7, the turning direction of the rotor 140 is indicated by thick dashed arrows and the flow direction of the hydraulic fluid 160 in each of the in-shaft bidirectional communication path 143, the in-shaft unidirectional communication path 144, the in-vane bidirectional communication path 151, and the in-vane unidirectional communication path 152 is indicated by thin dashed arrows. Moreover, in Figs. 6 and 7, a state in which the pressure of the hydraulic fluid 160 in a cell is relatively higher than those of other cells is indicated by dark hatching, and a state in which the pressure is relatively lower is indicated by light hatching.

The volume change compensation device 120 compensates for the volume change in the hydraulic fluid 160 due to the temperature change regardless of the above-described turning of the rotor 140. Specifically, around the volume change compensation device 120, when the temperature of the hydraulic fluid 160 in the damper device 100 has decreased, the entire volume of the hydraulic fluid 160 decreases. In this case, the hydraulic fluid 160 in the cylinder (compensation device housing portion 110) is pushed by the piston 121 and is supplied into the cell R1 through the communication hole 114, and in this manner, the volume change compensation device 120 compensates for the volume decrease in the hydraulic fluid 160 in the hydraulic fluid housing portion 103.

Around the volume change compensation device 120, when the temperature of the hydraulic fluid 160 has increased, the entire volume of the hydraulic fluid 160 in the damper device 100 increases. In this case, the hydraulic fluid 160 in the cell R1 is supplied into the cylinder (compensation device housing portion 110) through the communication hole 114 in response to the volume increase in the hydraulic fluid 160, and in this manner, the volume change compensation device 120 compensates for the volume increase in the hydraulic fluid 160 in the hydraulic fluid housing portion 103.

As will be understood from description of the operation above, according to the above-described embodiment, the damper device 100 is configured such that part of the compensation device housing portion 110 housing the volume change compensation device 120 has the external-air-side surface 112 contacting external air and another part of the compensation device housing portion 110 has the hydraulic-fluid-side surface 113 contacting the hydraulic fluid 160 in the hydraulic fluid housing portion 103. That is, the damper device 100 is configured such that part of the compensation device housing portion 110 contacts the external air while another part of the compensation device housing portion 110 is inside the hydraulic fluid housing portion 103. Thus, the amount of projection of the compensation device housing portion 110 from the outer surface of the damper device 100 can be reduced, leading to a smaller simpler outer shape of the damper device 100 and more installation location variations. Moreover, in the damper device 100, the surface area of the hydraulic fluid housing portion 103 facing the outside increases because of the compensation device housing portion 110, and therefore, an increase in the temperature of the hydraulic fluid 160 due to turning of the rotor 140 can be reduced.

Implementation of the present invention is not limited to the above-described embodiment, and various changes can be made without departing from the object of the present invention. Note that in description of each modification, the same reference numerals are used to represent elements similar to those of the above-described embodiment and overlapping description thereof will be omitted.

For example, in the above-described embodiment, the compensation device housing portion 110 is formed such that the surface area of the external-air-side surface 112 is greater than the surface area of the hydraulic-fluid-side surface 113. With this configuration, in the damper device 100, the amount of projection of the compensation device housing portion 110 into the hydraulic fluid housing portion 103 can be reduced, and a decrease in the capacity of the hydraulic fluid housing portion 103 and a decrease in the turning slide amount of the movable vane 145, 146 can be reduced. However, the compensation device housing portion 110 may be configured such that the surface area of the hydraulic-fluid-side surface 113 is greater than the surface area of the external-air-side surface 112. According to this configuration, in the damper device 100, the amount of projection of the compensation device housing portion 110 from the outer surface of the housing body 102 can be reduced, leading to a smaller simpler outer shape of the damper device 100 and more installation location variations.

In the above-described embodiment, the compensation device housing portion 110 is formed in the housing body 102. With this configuration, the damper device 100 can be formed without the large compensation device housing portion 110 greatly projecting along the shape of the housing body 102. However, the compensation device housing portion 110 is only required to include the external-air-side surface 112 and the hydraulic-fluid-side surface 113. Thus, the compensation device housing portion 110 may be formed in the lid 130 instead of or in addition to the housing body 102.

In the above-described embodiment, in the damper device 100, the compensation device housing portion 110 is formed at the position adjacent to the cell R1 communicating with the communication hole 114. With this configuration, the outer shape of the damper device 100 can be reduced in size and simplified, and the variations in the installation location of the damper device 100 can be increased. However, in the damper device 100, the compensation device housing portion 110 may be formed at a position adjacent to a cell (e.g., the cell R2 or the cell R3) other than the cell R1 communicating with the communication hole 114. In this case, the communication hole 114 is formed so as to extend inside and/or outside the housing body 102 such that the cell to which the communication hole 114 is opened and the compensation device housing portion 110 communicate with each other.

In the above-described embodiment, the communication hole 114 is opened to the opening side, to which the lid 130 is attached, of the hydraulic fluid housing portion 103. With this configuration, in the damper device 100, the communication hole 114 can be easily and accurately formed through the opening of the hydraulic fluid housing portion 103. However, the communication hole 114 may be formed in a cylindrical portion of the hydraulic-fluid-side surface 113 in the hydraulic fluid housing portion 103, i.e., be opened in the hydraulic-fluid-side surface 113 in the circumferential direction of the hydraulic fluid housing portion 103.

In the above-described embodiment, in the compensation device housing portion 110, the opening 111 through which the volume change compensation device 120 is taken in or out is formed on the side opposite to the lid 130. With this configuration, in the damper device 100, the volume change compensation device 120 can be taken in or out from the side opposite to the lid 130, and the compensation device housing portion 110 is formed in close contact with the lid 130 so that the outer shape of the damper device 100 can be reduced in size and simplified and the installation location variations can be increased. However, in the compensation device housing portion 110, the opening 111 through which the volume change compensation device 120 is taken in or out may be formed on the lid 130 side.

In the above-described embodiment, the compensation device housing portion 110 is formed so as to project to both sides of the fixed vane 104. With this configuration, in the damper device 100, the compensation device housing portion 110 and the fixed vane 104 can reinforce each other, leading to higher stiffness. However, the compensation device housing portion 110 is only required to be formed so as to face or project into the hydraulic fluid housing portion 103. Thus, the compensation device housing portion 110 may be formed, in the hydraulic fluid housing portion 103, so as to face or project from the bottom portion 103a and/or the housing portion wall surface 103b at the positions apart from the fixed vanes 104, 105.

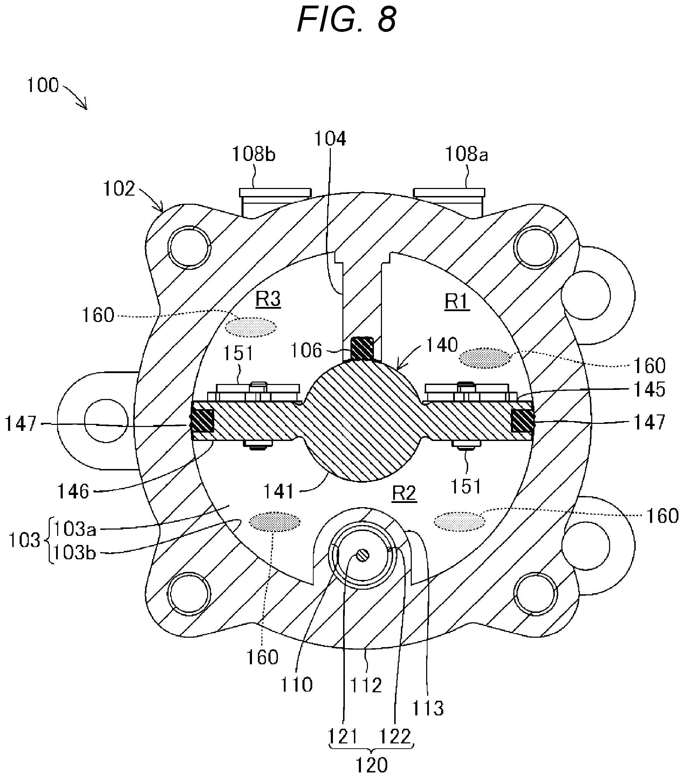

The compensation device housing portion 110 may be smoothly formed continuously to the outer shape of the housing 101 without projecting from the outer surface of the housing 101, and may be formed so as to face the outside of the housing 101. Alternatively, as shown in Fig. 8, the compensation device housing portion 110 may be formed, for example, such that the entirety of the volume change compensation device 120 is positioned inside the hydraulic fluid housing portion 103. In this case, the compensation device housing portion 110 can function as a component for defining the turning amount or turning angle of the rotor 140. In the damper device 100 shown in Fig. 8, the inside of the hydraulic fluid housing portion 103 is divided into three cells R1 to R3. Note that in the damper device 100 shown in Fig. 8, the movable vane 145 is provided with the in-vane bidirectional communication path 151 which allows the hydraulic fluid 160 to flow from the cell R2 side to the cell R1 side and allows the hydraulic fluid 160 to flow, in a limited manner, from the cell R1 side to the cell R2 side. Moreover, the movable vane 146 is provided with the in-vane bidirectional communication path 151 which allows the hydraulic fluid 160 to flow from the cell R2 side to the cell R3 side and allows the hydraulic fluid 160 to flow, in a limited manner, from the cell R3 side to the cell R2 side. In this damper device 100, the in-shaft bidirectional communication path 143 and the in-shaft unidirectional communication path 144 are not provided.

In the above-described embodiment, the compensation device housing portion 110 is formed so as to communicate with the cell R1, which is constantly under the relatively-low pressure, among the four cells R1 to R4 formed in the hydraulic fluid housing portion 103. With this configuration, in the damper device 100, a disadvantage that the pressure of each of the cells R2 to R4 under the relatively-high pressure is absorbed by the volume change compensation device 120 and the pressures of these cells R2 to R4 are less likely to increase can be avoided. However, the compensation device housing portion 110 may be formed in any of the four cells R1 to R4 formed in the hydraulic fluid housing portion 103, needless to say. That is, the compensation device housing portion 110 may be formed so as to communicate with any of the cells R2 to R4 under the relatively-high pressure among the four cells R1 to R4 formed in the hydraulic fluid housing portion 103.

In the above-described embodiment, the rotary damper is employed as the damper device 100. However, the damper device according to the present invention is broadly applicable to a damper device including a hydraulic fluid housing portion liquid-tightly housing hydraulic fluid including liquid and a hydraulic fluid pressing body sliding in the hydraulic fluid housing portion while pushing the hydraulic fluid and configured to damp force input to the hydraulic fluid pressing body by a hydraulic fluid flow.

In this case, the damper device may be configured as a direct-acting damper device such as a shock absorber. In the direct-acting damper device, the inside of a cylinder having a cylindrical shape and extending linearly is filled with hydraulic fluid, and a piston rod displaceable in the cylinder in the axis direction thereof while pushing the hydraulic fluid is provided. In this case, the cylinder is equivalent to the hydraulic fluid housing portion according to the present invention, and the piston rod is equivalent to the hydraulic fluid pressing body according to the present invention. Note that in the above-described embodiment, the movable vanes 145, 146 are equivalent to the hydraulic fluid pressing body according to the present invention. Moreover, liquid other than oil, such as water, may be employed as the hydraulic fluid 160.

In the above-described embodiment, in the housing 101, the housing body 102 is formed in a bottomed tubular shape. However, the housing 101 may be configured such that the housing body 102 is formed in a tubular shape and both end portions of the tubular body are closed with plate-shaped bodies equivalent to the lid 130.

In the above-described embodiment, in the damper device 100, the inside of the single hydraulic fluid housing portion 103 is divided into the four cells R1 to R4 by the fixed vanes 104, 105 and the movable vanes 145, 146. However, the damper device 100 is only required to be configured such that the inside of the single hydraulic fluid housing portion 103 is divided into at least two cells.

In the above-described embodiment, in the damper device 100, the housing 101 is on the fixed side, and the rotor 140 is on the movable side. However, turning of the rotor 140 relative to the housing 101 in the damper device 100 is relative turning. Thus, in the damper device 100, the housing 101 may be on the movable side and the rotor 140 may be on the fixed side, needless to say.

In the above-described embodiment, the in-vane bidirectional communication path 151 and the in-vane unidirectional communication path 152 are provided in the movable vanes 145, 146. However, the in-vane bidirectional communication path 151 and the in-vane unidirectional communication path 152 may be formed in the fixed vanes 104, 105.

In the above-described embodiment, the case where the damper device 100 is attached to the swing arm of the two-wheeled self-propelled vehicle has been described. However, the damper device 100 may be used with attached to a location (e.g., a seat opening/closing mechanism) of the two-wheeled self-propelled vehicle other than the swing arm, a vehicle (a suspension mechanism, seat mechanism, or opening/closing door of a four-wheeled self-propelled vehicle) other than the two-wheeled self-propelled vehicle, or a mechanical device, an electric device, or an instrument other than the self-propelled vehicles.

### LIST OF REFERENCE NUMBERS

- R1 to R4: Cell
- 100: Damper Device
- 101: Housing
- 102: Housing Body
- 102a: Lid Attachment Portion
- 103: Hydraulic Fluid Housing Portion
- 103a: Bottom Portion
- 103b: Housing Portion Wall Surface
- 104, 105: Fixed Vane
- 106: Seal
- 107: Rotor Support Portion
- 108a, 108b: Air Vent Hole
- 110: Compensation Device Housing Portion
- 111: Opening
- 112: External-Air-Side Surface
- 113: Hydraulic-Fluid-Side Surface
- 114: Communication Hole
- 120: Volume Change Compensation Device
- 121: Piston
- 122: Pressing Elastic Body
- 123: Plug
- 130: Lid
- 131: Lid Body
- 132a, 132b: Adjustment Needle
- 133: Rotor Support Portion
- 134: Bolt
- 140: Rotor
- 141: Shaft
- 142: Coupling Portion
- 143: In-Shaft Bidirectional Communication Path
- 144: In-Shaft Unidirectional Communication Path
- 145, 146: Movable Vane
- 147: Seal
- 151: In-Vane Bidirectional Communication Path
- 152: In-Vane Unidirectional Communication Path
- 160: Hydraulic Fluid

## Claims

1. A damper device comprising:
a hydraulic fluid housing portion that liquid-tightly houses hydraulic fluid including liquid;
a hydraulic fluid pressing body that slides in the hydraulic fluid housing portion while pushing the hydraulic fluid; and
a compensation device housing portion that houses a volume change compensation device configured to compensate for a volume change in the hydraulic fluid in the hydraulic fluid housing portion,
wherein the damper device damps force input to the hydraulic fluid pressing body by a flow of the hydraulic fluid,
part of the compensation device housing portion has an external-air-side surface contacting external air, and
another part of the compensation device housing portion has a hydraulic-fluid-side surface contacting the hydraulic fluid in the hydraulic fluid housing portion.

2. The damper device according to claim 1, wherein
in the compensation device housing portion, a surface area of the external-air-side surface is greater than a surface area of the hydraulic-fluid-side surface.

3. The damper device according to claim 1, wherein
in the compensation device housing portion, a surface area of the hydraulic-fluid-side surface is greater than a surface area of the external-air-side surface.

4. The damper device according to any one of claims 1 to 3, wherein
the damper device is configured as a rotary damper including:
a housing having the hydraulic fluid housing portion formed in a cylindrical shape and having a fixed vane formed in a wall shape along a radial direction in the hydraulic fluid housing portion and dividing an inside of the hydraulic fluid housing portion to block a flow of the hydraulic fluid in a circumferential direction, and
a rotor having, at an outer peripheral portion of a shaft, a movable vane dividing the inside of the hydraulic fluid housing portion and configured to turn while pushing the hydraulic fluid.

5. The damper device according to claim 4, wherein
the compensation device housing portion is formed in the housing.

6. The damper device according to claim 5, wherein
the hydraulic fluid housing portion is formed in a bottomed cylindrical shape opened on one side and having a bottom portion on another side, and an opening thereof is closed with a lid, and
the compensation device housing portion has, on a side opposite to the lid, an opening through which the volume change compensation device is taken in or out.

7. The damper device according to any one of claims 4 to 6, wherein
the compensation device housing portion is formed so as to project to both sides of the fixed vane.

8. The damper device according to any one of claims 4 to 7, wherein
in the housing, the inside of the hydraulic fluid housing portion is divided into at least two cells, and
the compensation device housing portion is formed so as to communicate with a cell, which is constantly under a relatively-low pressure, among the at least two divided cells.

9. The damper device according to any one of claims 4 to 8, wherein
the compensation device housing portion is formed at a position adjacent to the cell communicating with the compensation device housing portion.

10. The damper device according to any one of claims 4 to 9, wherein
the hydraulic fluid housing portion is formed in the bottomed cylindrical shape opened on the one side and having the bottom portion on the another side, and the opening thereof is closed with the lid, and
in the compensation device housing portion, a communication hole through which the hydraulic fluid flows to and from the hydraulic fluid housing portion is opened on a side close to the opening of the hydraulic fluid housing portion.
